# EUROPEAN PATENT APPLICATION

(11) **EP 3 179 416 A1**
(43) Date of publication of application: **14.06.2017**
(21) Application number: 16197687.3
(22) Date of filing: 08.11.2016
(51) Int. Cl.: G06Q 10/00, G06Q 50/26, G06Q 50/30, G08G 1/09

(54) **VEHICULAR DETECTION KIT**

(30) Priority: 11.12.2015 IT IT20152358 U
(71) Applicant: Helian S.r.l., 64024 Notaresco (Teramo) (IT)
(72) Inventor: FOSCHI, Silvio, 64025 Pineto (Teramo) (IT)
(74) Representative: Rapisardi, Mariacristina

(57) **Abstract**

The vehicular detection kit comprises a control and processing member connected to a memory unit, to an interface module and to acquisition means for data that can be processed by the control member, the acquisition means comprising at least one image acquisition apparatus and at least one satellite geolocator integrated on board the image acquisition apparatus for geolocating the acquired images, the control member comprising a recognition module for recognizing a string of alphanumeric characters for recognizing the license plates of the vehicles from the acquired images, a symbol recognition module for recognizing road signs from the acquired images, and a geofencing module for detecting predefined geographic areas from the acquired and geolocated images.

## Description

The object of the present invention is a vehicular detection kit, particularly for detecting offenses and violations of regulations, laws, current standards and suchlike.

As is known, in their activities for detecting offenses and violations of the laws, particularly of the motor vehicle code, the ascertaining bodies including for example traffic police, paramilitary police units and suchlike, use a variety of equipment and information technologies to assist them in these activities. However, this equipment has the drawback of being specific for detecting a given type of violation.

For example, speed measurers make it possible to identify speeding but not other types of offenses.

Moreover, the devices of the prior art are generally complex and they can be used only by specialized personnel.

The principal task of the present invention is to resolve the problems stated above by offering a vehicular detection kit particularly for detecting offenses and violations of regulations, laws, current standards and suchlike with a high level of versatility.

Within the scope of this task, one aim of the invention is to offer a vehicular detection kit for detecting offenses and violations of regulations, laws, current standards and suchlike that is capable of detecting offenses of various types. Another aim of the invention is to offer a vehicular detection kit for detecting offenses and violations of regulations, laws, current standards and suchlike that is capable of operating independently without the assistance of specialized personnel. A further aim of the invention is to offer a vehicular detection kit for detecting offenses and violations of regulations, laws, current standards and suchlike that is simple and immediate as regards application and use.

Another aim of the invention is to offer a procedure for detecting offenses and violations of regulations, laws, current standards and suchlike, as well as a relative vehicular detection kit, with limited costs, relatively simple practical realization and secure application.

This task and these aims are achieved by a vehicular detection kit comprising a control and processing member connected to a memory unit, to an interface module and to acquisition means for data that can be processed by the control member, characterized in that said acquisition means comprises at least one image acquisition apparatus and at least one satellite geolocator integrated on board said at least one image acquisition apparatus for geolocating the acquired images, said control member comprising a recognition module for recognizing a string of alphanumeric characters for recognizing the license plates of said vehicles from the acquired images, a symbol recognition module for recognizing road signs from the acquired images, and a geofencing module for detecting predefined geographic areas from the acquired and geolocated images.

Said interface module is advantageously configured to display the results, processed by said control member, defining matches between predetermined reference data stored in said memory unit and the acquired data.

Further characteristics and advantages of the invention will emerge more clearly from the description of a preferred, but not exclusive, embodiment of the vehicular detection kit for detecting offenses and violations of regulations, laws, current standards and suchlike, which is illustrated by way of approximate and nonlimiting example in the attached drawings, of which:

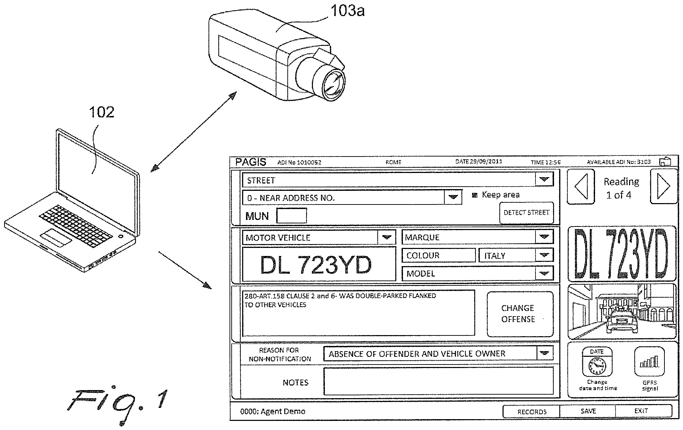

Figure 1 is a schematic representation of some stages of the procedure realized using the kit according to the invention;
Figure 2 represents a vehicle equipped with the vehicular kit according to the invention;
Figure 3 represents the vehicle equipped with the vehicular kit according to the invention;

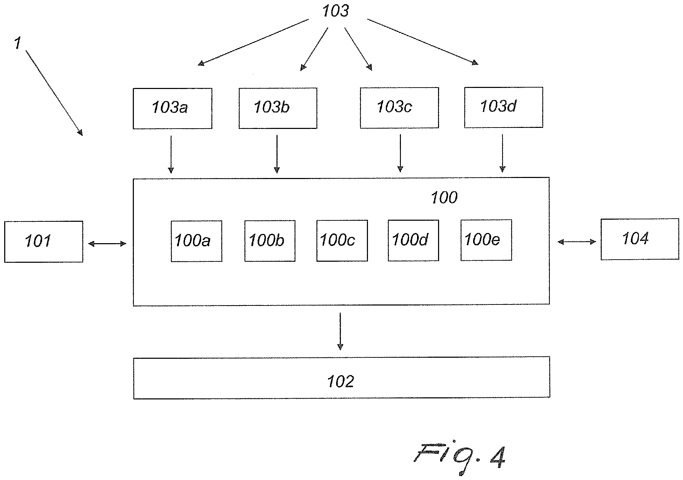

Figure 4 is a block diagram representing the procedure realized using the kit according to the invention.

With particular reference to these figures, a vehicular detection kit for detecting offences and violations of regulations, laws, current standards and suchlike is indicated in its entirety by the number 1.

The vehicular kit 1 comprises a control and processing member 100 connected to a memory unit 101, to an interface module 102 and to acquisition means 103 for data that can be processed by the control member 100.

The interface module 102 is configured to display the results, processed by the control member 100, defining matches between predetermined reference data stored in the memory unit 101 and the acquired data.

The interface module 102 can be of a type selected from among a portable computer, a tablet, a smartphone and suchlike.

The acquisition means 103 comprises at least one image acquisition apparatus 103a and at least one satellite geolocator 103b integrated on board the image acquisition apparatus 103a for geolocating the acquired images.

The control member 100 comprises a recognition module 100a for recognizing a string of alphanumeric characters for recognizing the license plates of vehicles from the images acquired by the image acquisition apparatus 103a, a symbol recognition module 100b for recognizing road signs from the images acquired by the image acquisition apparatus 103a, and a geofencing module 100c.

The geofencing module 100c is configured to detect predefined geographic areas from the images that have been acquired by the image acquisition apparatus 103a and geolocated by the satellite geolocator 103b.

In particular, these predefined geographic areas are areas subject to regulated parking rules or having particular parking constraints.

Lists of the predefined geographic areas, regulations currently in force in the predefined geographic areas, and preferably also lists of license plate numbers corresponding to predetermined vehicles are among the predetermined reference data contained in the memory unit 101.

The image acquisition apparatus 103a enables the detection of images of vehicles and road signs to be transferred to the control member 100.

The image acquisition apparatus 103a can be of a type preferably selected from among an infrared video camera, an IP (Internet Protocol) video camera, a dual lens video camera, a still camera and suchlike.

More specifically, the image acquisition apparatus 103a can be equipped with constraining means for removably coupling it to a vehicle.

Such means may consist of suction cups 5 that make it possible to couple this apparatus 103a onto any type of motor vehicle, automotive vehicle, van or motorcycle.

In this manner, installation can be immediate without any type of specific wiring, thereby enabling easy installation of the apparatus 103a thereof.

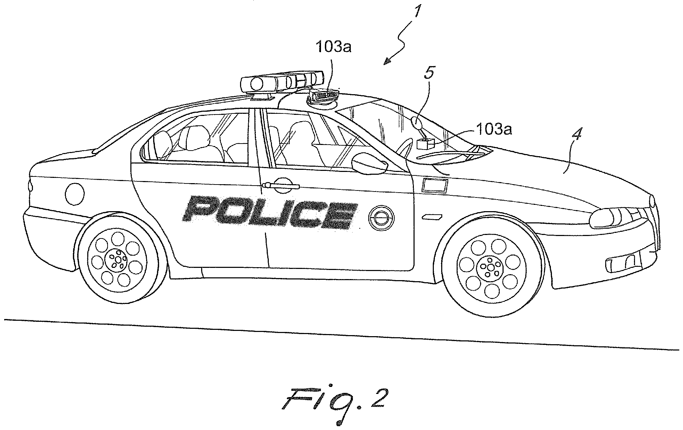

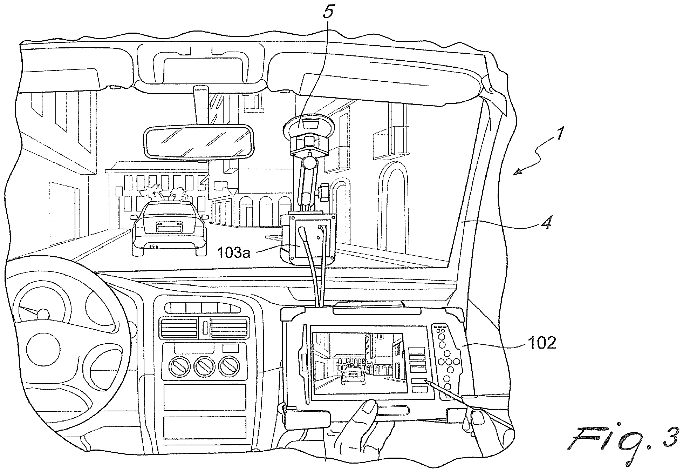

According to the preferred solution illustrated in Figures 2 and 3, two image acquisition apparatuses, a dual lens video camera 103a positioned on the roof of the vehicle 4, and an IP video camera 103a installed in the interior of the vehicle 4 thereof are provided.

The dual lens video camera 103a comprises an integrated system of two video cameras, one being a colour camera and the other an infrared (IR) camera, which make it possible to detect images even if the vehicle 4 or the vehicle to be sanctioned, or both are moving.

The IP video camera 103a, however, generates a video signal in digitized form, ready for direct transmission to the control member 100, without requiring analog/digital conversion.

The acquisition means 103 also preferably comprises a speed detector 103c for detecting the speed of vehicles, for example a radar.

The control member 100 thus also comprises a recognition module 100d for recognizing the speed of vehicles.

The acquisition means 103 also preferably comprises a wireless receiver 103d configured to interact in real time with parking meters provided in the predefined geographic areas.

The control member 100 thus also comprises a recognition module 100e for data transmitted by the parking meters, such as license plates and the current time, date, duration of parking time associated with each license plate.

The results processed by the control member 100 can be displayed in one or more tables containing for example the images detected by the image acquisition apparatus 103a and particularly the license plates detected, the road signs detected, the detected speed of the vehicles, the date and time of detection, the detected GPS mapped position and the detected predefined geographic areas.

The detection procedure using the detection kit is as follows.

The image acquisition apparatus 103 a is activated by the operator so as to carry out the detection of images of vehicles and road signs present along a road, in a square and suchlike.

The satellite geolocator 103b, which is also activated, geolocates the images acquired by the apparatus 103 a.

The speed detector 103c, which is also activated, detects the speed of the moving vehicles in the images acquired by the apparatus 103a.

The acquired and geolocated images are received by the control member 100, which sends them to the recognition module 100a for recognizing the license plates of vehicles, to the road sign recognition module 100b and to the geofencing module 100c, for processing.

The recognition module 100a for recognizing the license plates of vehicles then returns the detected license plates to the control member 100, the road sign recognition module 100b returns the detected road signs to the control member 100 and the geofencing module 100c returns the detected predefined geographic area subject to regulated parking rules or having particular parking constraints to the control member 100.

The wireless receiver 103d, which is also activated, acquires data regarding license plates and relative data, the time of payment and the duration of the parking time for which the fee has been paid, from the parking meters provided in the predefined geographic area detected by the geofencing module 100c. These data are recognized by the module 100e, which returns them to the control member 100. Lastly, the data received by the speed detector 103c and recognized by the module 100d are also returned to the control member 100.

All of these procedures can also be performed in real time.

At this point, the control member 100 compares the data acquired through detection, possibly cross-checked, with the predetermined reference data stored in the memory unit 101, and produces a result that displays on the interface module 102 with the operator.

For example, from this comparison, the control member 100 can detect the possible presence of unauthorized vehicles in restricted traffic zones (e.g. some streets in city centres), in reserved lanes, or double-parked vehicles or vehicles in violation of no parking areas.

For example, to evaluate whether a vehicle is parked without authorization, after acquiring the license plate from the video camera, the control member compares it with the plates received from the parking meters: If the plate acquired from the video camera is not among the group of plates acquired from the parking meters, or if it is, but it is matched with a now expired authorized parking time, the control member 100 processes a sanction alert for the vehicle at hand as a result on the interface module 102.

Moreover, from such comparisons, the control member 100 can detect stolen vehicles, vehicles under administrative impoundment, vehicles owned by repeat offenders with outstanding fines, or vehicles of other sorts.

Using the interface module 102, the operator preferably carries out an analysis of the results prior to validation thereof.

The kit preferably comprises a centralized processing group for processing the results 104 and that is remote from the vehicle 4.

The validated reports shall then be sent for example to the databank of the Fines and Notifications Office of the Local Police, for preparation of the certified report, which shall be served subsequently to the owner of the vehicle in violation, within the time limits established by law and according to customary procedures.

The validation of the results can possibly be carried out not by the operator in the vehicle 4, but only by an operator of the remote centralized processing group 104.

During patrols, the vehicles 4 of the auxiliary traffic enforcement agents and/or the Local, Provincial Police Agents and suchlike, equipped with the vehicular kit 1, can carry out the detection process for detecting offenses and violations of regulations, laws, current standards and suchlike rapidly and in a substantially independent manner.

The kit 1 according to the invention can be used to carry out precise detection and in this case, once an offending vehicle has been identified, the user directs the image acquisition apparatus 103a towards this vehicle, activates the apparatus and carries out detection of the image thereof.

The detection process can also be carried out independently and in this case, while the vehicle 4 is moving, the kit 1 will detect the images of the vehicles present on a road, in a square and suchlike and check whether they are in violation of regulations, laws, current standards and suchlike.

The images of the vehicles detected by the image acquisition apparatus can be used for identification of persons accountable for illegal actions or of any witnesses. The detection kit advantageously offers a high level of versatility as it is capable of detecting offenses of various types simply, immediately and independently without the assistance of specialized personnel.

As stated, the kit in accordance with the invention processes the input data from the acquisition means, in real time and in a static and dynamic manner, so as to detect a predefined geographic area subject to regulated parking rules or subject to particular parking constraints.

To assess whether a driver of a vehicle has committed an offense, the control member 100 combines the information on the detected predefined geographic area in which the vehicle is found, on the road signs detected around the vehicle, on the detected speed of the vehicle if the latter is moving, on the date, and on the starting time and duration of authorized parking time if the vehicle is parked.

The context in which the vehicle being evaluated is found is identified precisely and in a detailed manner: in particular, an abundance of details on regulations and restrictions, parking rules, idling, traffic and access rules, permitted directions of traffic and permitted speed limits are stored in the memory unit 101 concerning the entire pre-established geographic area detected by the geofencing module 100c.

The kit thus detects a possible offence by the driver of the vehicle, said detection being carried out in an extremely precise, accurate and reliable manner.

The invention thus conceived is susceptible to numerous modifications and variants, all of which falling within the scope of the inventive concept; moreover, all details may be replaced by other technically equivalent elements.

## Claims

1. A vehicular detection kit (1) comprising a control and processing member (100) connected to a memory unit (101), to an interface module (102) and to acquisition means (103) for data that can be processed by the control member (100), **characterized in that** said acquisition means (103) comprises at least one image acquisition apparatus (103a) and at least one satellite geolocator (103b) integrated on board said at least one image acquisition apparatus (103a) for geolocating the acquired images, said control member (100) comprising a recognition module (100a) for recognizing a string of alphanumeric characters for recognizing the license plates of said vehicles from the acquired images, a symbol recognition module (100b) for recognizing road signs from the acquired images, and a geofencing module (100c) for detecting predefined geographic areas from the acquired and geolocated images.

2. The vehicular detection kit (1) according to claim 1, **characterized in that** said interface module (102) is configured to display the results, processed by said control member (100), defining matches between predetermined reference data stored in said memory unit (101) and the acquired data.

3. The vehicular detection kit (1) according to claim 1, **characterized in that** said predefined geographic areas are areas having specific regulation for idling and/or parking and/or traffic regulations.

4. The vehicular detection kit (1) according to claim 1, **characterized in that** said acquisition means (103) comprises at least one speed detector (103c) for detecting the speed of said vehicles.

5. The vehicular detection kit (1) according to claim 4, **characterized in that** said at least one speed detector (103c) is a radar.

6. The vehicular detection kit (1) according to claim 1, **characterized in that** said acquisition means (103) comprises a wireless receiver (103d) configured to interact in real time with parking meters associated with said predefined geographic area.

7. The vehicular detection kit (1) according to any one of claims 3 to 6, **characterized in that** said predetermined reference data comprise lists of said predefined geographic areas, each of which being accompanied by corresponding regulation for idling and/or parking and/or traffic regulations.

8. The vehicular detection kit (1) according to any one of the preceding claims, **characterized in that** said control member (100) is configured to process results, also by cross-checking matches between predetermined reference data and the acquired data.
